# FASCICULE DE BREVET EUROPEEN

(11) **EP 3 697 638 B1**
(45) Date de publication et mention de la délivrance du brevet: **16.02.2022**
(21) Numéro de dépôt: 18783058.3
(22) Date de dépôt: 13.09.2018
(51) Int. Cl.: B60K 1/02, B60K 6/448, B60K 6/48, B60K 6/52, B60K 17/356, B60W 10/02, B60W 30/184, B60W 20/10, F16D 48/06

(54) **SYSTEME ET PROCEDE DE PILOTAGE DU COUPLAGE/DECOUPLAGE D'UN DISPOSITIF D'ENTRAÎNEMENT DE VEHICULE, ET VEHICULE AUTOMOBILE LES INCORPORANT**
SYSTEM UND VERFAHREN ZUM STEUERN DER KOPPLUNG/ENTKOPPLUNG EINER FAHRZEUGANTRIEBSVORRICHTUNG UND KRAFTFAHRZEUG MIT DIESEM SYSTEM UND VERFAHREN
SYSTEM AND METHOD FOR CONTROLLING THE COUPLING/DECOUPLING OF A VEHICLE DRIVING DEVICE, AND MOTOR VEHICLE INCORPORATING THEM

(30) Priorité: 02.10.2017 FR 1759174
(43) Date de publication de la demande: 26.08.2020
(73) Titulaire: PSA Automobiles SA, 78300 Poissy (FR)
(72) Inventeur: MILHAU, Yohan, 78630 ORGEVAL (FR); ROCQ, Gaetan, 78125 LA BOISSIERE ECOLE (FR); BARDET, Arnaud, 78150 LE CHESNAY (FR); ONDRUS, Tony, 74140 Sciez (FR)
(86) Numéro de dépôt international: PCT/FR2018/052246
(87) Numéro de publication internationale: WO 2019/068980

(56) Documents cités:
- EP-A1- 2 123 498
- FR-A1- 2 927 849
- FR-A1- 2 931 427

## Description

L'invention a pour objet un système de pilotage du couplage/découplage d'un dispositif d'entraînement d'un véhicule ainsi qu'un procédé de pilotage identique. Plus particulièrement, l'invention entend proposer une solution pour gérer de façon optimum le couplage/découplage d'un dispositif d'entraînement dans un véhicule automobile, tel qu'un véhicule hybride ou un véhicule électrique dont on peut déconnecter (et reconnecter) les sources motrices des roues.

Dans la suite, l'invention est présentée en lien avec l'une de ces applications, plus précisément une application à un véhicule automobile à hybridation électrique, c'est-à-dire comportant un moteur thermique et au moins un moteur électrique associé à des moyens de stockage d'énergie.

Toutefois, il doit être noté que la présente invention trouve à s'appliquer à tous types de véhicules comportant un système de couplage/découplage du dispositif d'entraînement du moyen de déplacement, tel que par exemple un véhicule électrique ou un bateau dont on peut déconnecter les sources motrices du moyen de déplacement (ici respectivement des roues et une hélice).

De la même manière, l'invention n'est pas limitée à l'utilisation d'une machine électrique dans un véhicule hybride, le véhicule pouvant par exemple comporter une chaîne de transmission comprenant au moins un moteur thermique et au moins une machine (ou moteur) hydraulique ou encore à air comprimé.

Un type de véhicule hybride connu comporte un moteur thermique de traction qui peut être du type essence ou Diesel, entraînant les roues du train avant, couplé de manière permanente à une machine électrique avant qui peut fonctionner en moteur, notamment pour démarrer ce moteur thermique, et en génératrice pour recharger une batterie du réseau de bord ainsi qu'un dispositif de stockage de l'énergie électrique.

Le dispositif de stockage de l'énergie alimente une deuxième machine électrique arrière entraînant les roues du train arrière, qui peut aussi fonctionner en moteur pour délivrer un couple sur ces roues, ou en génératrice afin de récupérer l'énergie cinétique du véhicule et de recharger ce dispositif de stockage.

D'une manière générale, le dispositif de stockage de l'énergie électrique, appelé classiquement batteries, peut comporter des cellules électrochimiques comprenant tous types de technologies, ou des condensateurs, regroupés en ou plusieurs modules, et connectés entre eux en série ou en parallèle.

Pour certains de ces véhicules, les batteries peuvent être aussi rechargées sur un réseau de distribution d'électricité, après un raccordement sur ce réseau lors d'un arrêt du véhicule.

On peut ainsi réaliser différents modes de fonctionnement, comportant notamment un mode uniquement avec la motorisation électrique et sans émission de gaz polluants, appelé mode électrique ou mode « ZEV », un mode hybride et un mode sport associant les deux motorisations pour favoriser respectivement la consommation et les performances du véhicule, et un mode avec les quatre roues motrices permettant d'améliorer la sécurité et la tenue de route de ce véhicule.

La combinaison de machines électriques reliées à une batterie basse tension avec le moteur thermique permet de diminuer la consommation du véhicule. Le système électrique permet de récupérer de l'énergie comme par exemple dans les situations de vie pied levé, équivalent à un couple de volonté conducteur négatif. Cette énergie électrique sera ensuite utilisée pour tracter le véhicule ou pour délester le moteur thermique afin de réduire sa sollicitation. Cependant on peut être amené à découpler la machine électrique actionnant les roues lorsque la vitesse devient trop importante afin de la protéger du surrégime.

Ainsi, on connaît le brevet EP 2123498 qui décrit un dispositif de traction électrique pour véhicule hybride caractérisé par son dispositif de découplage de l'entraînement, son rapport de démultiplication étant tel que la vitesse maximale admissible de rotation de la machine électrique correspond à une vitesse nettement inférieure à la vitesse maximale du véhicule automobile.

De manière générale, le couplage de la machine électrique est piloté pour minimiser la consommation d'énergie fossile et pour accroitre les performances du véhicule afin de combiner l'énergie électrique à l'énergie thermique pour déplacer les véhicules. Cependant, au-delà d'un certain régime, par exemple une vitesse de rotation de la machine électrique de 13 000 tours par minute, la machine électrique doit être découplée afin d'éviter une casse mécanique causée par un surrégime de cette dernière (limitations organique et sécuritaire). Une fois repassé sous cette vitesse, la machine peut être couplée de nouveau. Le découplage (tout comme le couplage) n'est pas instantané, le temps de réalisation de ce découplage dépend de plusieurs paramètres et peut durer près d'une seconde. Une valeur de vitesse de seuil du moyen d'actionnement (par exemple la machine électrique) est prédéfinie pour commander, via un moyen de commande du véhicule (système embarqué ou calculateur dédié), le découplage ou l'ouverture du moyen d'entraînement, en l'espèce un crabot.

Or, pendant ce laps de temps relativement long, il est tout à fait possible que la volonté du conducteur ait été brutalement modifiée, en particulier par un freinage brusque. Si une telle décélération se produit, suite à l'envoi d'une demande de découplage (la vitesse de seuil ayant été au moins égalée par le moyen d'actionnement), le découplage est réalisé alors même que la vitesse maximale (ou régime maximum admissible) du moyen d'actionnement ne sera jamais atteinte.

Dans cette configuration, l'ouverture (découplage) intempestive du crabot nuit à l'optimisation de l'utilisation du moyen d'actionnement et peut, à force de répétition, endommager prématurément les pièces mécaniques du moyen d'entraînement.

La présente invention a notamment pour but d'éviter ces inconvénients de la technique antérieure et de proposer un système de pilotage du couplage/découplage d'un dispositif d'entraînement d'un véhicule permettant de profiter au maximum de la puissance électrique sans mettre en danger les parties mécaniques de la machine électrique.

Dans ce but, la présente invention propose un système de pilotage du couplage/découplage d'un dispositif d'entraînement de véhicule, ledit système comportant ledit dispositif d'entraînement, un moyen d'actionnement, au moins un moyen de déplacement du véhicule et un moyen de commande, le dispositif d'entraînement étant actionné par le moyen d'actionnement, dans lequel le moyen de déplacement du véhicule est entraîné par le dispositif d'entraînement lorsqu'il est en mode de couplage, le moyen d'actionnement présentant une vitesse maximale admissible de fonctionnement ainsi qu'une vitesse ascendante de seuil de fonctionnement, inférieure à ladite vitesse maximale, commandant, via le moyen de commande, le découplage du dispositif d'entraînement, caractérisé en ce que, une fois la commande de découplage envoyée, le moyen de commande contrôle au moins une valeur du gradient de vitesse du moyen de déplacement pour confirmer ou infirmer la commande de découplage.

Grâce à l'invention, il existe dorénavant un double contrôle de l'état d'accélération du moyen de déplacement (classiquement la ou les roues reliées au moyen d'entraînement) de manière à confirmer ou non la demande de découplage sécuritaire destinée à protéger le moyen d'actionnement d'un surrégime.

Ce double contrôle est effectué une fois que la demande d'ouverture par exemple d'un crabot est envoyée et pendant toute la durée nécessaire au décrabotage. La présente invention utilise avantageusement le fait que l'interruption du découplage, ou plus précisément l'envoi du signal commandant l'arrêt du découplage ou encore le maintien en position fermée du crabot, est instantanée ou quasi-instantanée alors que le découplage (ou décrabotage) prend classiquement près d'une seconde et durer jusqu'à 1,5 secondes.

Bien entendu, ce double contrôle, avec éventuellement l'envoi d'un contrordre conduisant à annuler la commande de décrabotage, n'est possible que jusqu'à la désynchronisation du crabot, cette dernière n'intervenant que dans les derniers instant du temps de décrabotage. Ainsi, pour prendre un exemple, si le temps de décrabotage est de 0,8 seconde, la désynchronisation intervient à 0,7 seconde de sorte que l'envoi du contrordre (annulation de la commande de décrabotage), et donc la possibilité effective d'un double contrôle, n'est possible que pendant cette période de temps de 0,7 seconde (sur une durée totale de 0,8 seconde). Autrement dit, de manière générale, le double contrôle est possible de façon effective sur au moins 70% de la durée de découplage, voire au moins 80-90% de cette durée.

Dans la suite, l'invention est présentée en application au découplage ou décrabotage car ce dernier évite tout surrégime et consiste donc en une procédure sécuritaire classique. Néanmoins, dans certains cas très particuliers, par exemple lors d'une accélération très brusque alors même que la commande de couplage ou de crabotage a été envoyée, il y a également un risque que la vitesse du moyen d'actionnement dépasse la vitesse maximale ou régime maximale admissible. C'est pourquoi le double contrôle prévu dans le cadre de l'invention en premier lieu pour le découplage/décrabotage s'applique également à la procédure de couplage.

Ainsi, le système de pilotage du couplage/découplage d'un dispositif d'entraînement de véhicule comprend également une vitesse descendante de seuil, inférieure à ladite vitesse maximale et à ladite vitesse ascendante de seuil, commandant, via ledit moyen de commande, le couplage du dispositif d'entraînement et en ce que, une fois la commande de couplage envoyée, le moyen de commande contrôle au moins une valeur du gradient de vitesse de déplacement pour confirmer ou infirmer la commande de couplage.

Selon une particularité de l'invention, la confirmation de la commande de découplage est vérifiée si ladite valeur du gradient de vitesse du moyen de déplacement entraîne la vitesse du moyen d'actionnement à égaler au moins la vitesse maximale et en ce que l'infirmation de la commande de découplage est vérifiée si ladite valeur entraîne la vitesse du moyen d'actionnement à rester inférieure à ladite vitesse maximale, et inversement pour la commande de couplage. Plus précisément, la confirmation de la commande de couplage est vérifiée si ladite valeur du gradient de vitesse du moyen de déplacement entraîne la vitesse du moyen d'actionnement à rester inférieure à ladite vitesse maximale et en ce que l'infirmation de la commande de couplage est vérifiée si ladite valeur entraîne la vitesse du moyen d'actionnement à égaler au moins la vitesse maximale.

Selon une possibilité offerte par l'invention, ladite vitesse ascendante de seuil (Sh) et/ou ladite vitesse descendante de seuil (Sb) est/sont variable(s)en fonction d'au moins un paramètre mesuré.

Grâce à cette caractéristique avantageuse de l'invention, la vitesse ascendante et descendante de seuil de fonctionnement ne sont plus constantes, comme dans les systèmes selon l'état de la technique, et varie en fonction de conditions d'environnement ainsi qu'au regard du gradient de vitesse (accélération) du moyen de déplacement, l'objectif étant à nouveau d'une part de sécuriser le système en évitant tout dépassement de la susdite vitesse maximale et d'autre part à optimiser la part du moyen d'actionnement.

Ainsi, dans un véhicule hybride électrique, la consommation du moteur thermique sera réduite, diminuant la consommation d'énergie fossile et d'autant la pollution générée. Si le véhicule est une voiture électrique, le découplage de la machine électrique permettra également au véhicule de bénéficier de son inertie de façon optimum, par exemple lors d'une descente.

Dans de tels véhicules, un avantage de cette caractéristique avantageuse, en combinaison avec l'invention, réside dans le fait d'augmenter le taux de disponibilité de la machine électrique tout en assurant la protection organique des pièces mécaniques la constituant. La présente invention permet d'augmenter le taux d'énergie récupéré lors des freinages, de gagner en disponibilité électrique lors des phases d'accélération tout en maitrisant les phases de surrégime de la machine.

Le découplage du dispositif d'entraînement est prioritaire et indispensable pour éviter l'endommagement du moyen d'actionnement si l'on atteint ou dépasse la vitesse (ou régime) maximale admissible de fonctionnement dudit moyen d'actionnement.

Néanmoins, il est souhaitable que le couplage du dispositif d'entraînement utilise le même procédé d'optimisation de la valeur de seuil de fonctionnement, cette fois-ci non pas pour éviter un surrégime du moyen d'actionnement (machine électrique) mais pour optimiser la reprise de ce dernier. Dans cette configuration où le dispositif d'entraînement est découplé, c'est-à-dire que la vitesse maximale admissible de fonctionnement du moyen d'actionnement est théoriquement atteinte (du fait de la vitesse du moyen de déplacement), il est souhaitable d'anticiper le couplage pour que ce dernier ait lieu juste au moment où la vitesse du moyen d'actionnement repasse sous ladite vitesse maximale de fonctionnement.

De préférence, ledit paramètre de la vitesse ascendante de seuil, ainsi qu'éventuellement de la vitesse descendante de seuil, consiste en un gradient de vitesse du moyen de déplacement.

Avantageusement, ledit paramètre de la vitesse ascendante de seuil, ainsi qu'éventuellement de la vitesse descendante de seuil, consiste en un temps théorique de découplage et le cas échéant de couplage du dispositif d'entraînement.

Ainsi, il est plus simple que le moyen de commande, par exemple un système embarqué électronique de gestion du véhicule, utilise exactement le ou les mêmes paramètres à mesurer pour déterminer à l'instant t la vitesse ascendante de seuil (en vue du découplage) et/ou de la vitesse descendante de seuil (en vue du couplage) mais il peut tout à fait être envisagé que ces deux vitesses de seuil soient déterminées en utilisant des paramètres mesurés différents.

Dans la suite, il sera expliqué plus précisément ce qu'on entend par l'expression de « temps théorique » de couplage et/ou découplage du dispositif d'entraînement.

Selon un mode d'exécution préféré de l'invention, le dispositif d'entraînement consiste en un crabot ou un embrayage.

Selon un autre mode d'exécution préféré de l'invention, le moyen d'actionnement consiste en une machine électrique, une machine à air comprimé ou une machine hydraulique.

Dans le même but, la présente invention propose également un véhicule automobile, ledit véhicule comportant au moins un système de pilotage du couplage/découplage d'un dispositif d'entraînement de véhicule selon l'une quelconque des revendications précédentes et en ce qu'il consiste en un véhicule hybride, comportant une traction par moteur thermique et une traction par moteur électrique, ou en un véhicule électrique.

Toujours dans le même but, la présente invention propose un procédé de pilotage du couplage/découplage d'un dispositif d'entraînement de véhicule, dans lequel au moins un moyen de déplacement du véhicule est entraîné par un dispositif d'entraînement lorsqu'il est en mode de couplage, un moyen d'actionnement présentant une vitesse maximale admissible de fonctionnement ainsi qu'une vitesse ascendante de seuil de fonctionnement, inférieure à ladite vitesse maximale, commandant le découplage du dispositif d'entraînement, une fois la commande de découplage envoyée, un moyen de commande contrôlant une valeur du gradient de vitesse du moyen de déplacement pour confirmer ou infirmer la commande de découplage.

Les avantages du procédé et du véhicule conformes à l'invention étant similaires à ceux du dispositif bi-coquille énumérés plus haut, ils ne sont pas répétés ici.

D'autres aspects et avantages de l'invention apparaîtront à la lecture de la description qui suit d'un mode particulier de réalisation, donné à titre d'exemple non limitatif et en référence aux dessins qui l'accompagnent, dans lesquels :
- la figure 1 est un schéma illustrant le fonctionnement du système et du procédé selon l'invention ;
- la figure 2 est un autre schéma illustrant un fonctionnement complémentaire optionnel du système et du procédé selon l'invention.

A nouveau, il est rappelé que l'invention est illustrée ici dans un exemple avec un véhicule hybride électrique mais la machine électrique peut être remplacée par exemple par une technologie pneumatique ou hydraulique, de préférence hydraulique.

Un véhicule hybride électrique rechargeable, ici du type PHEV (anglais pour « *Plug-in Hybrid Electric Vehicle* »), utilisent les deux motorisations, électrique et thermique, qui agissent de concert pour animer le véhicule. La machine électrique arrière présente sur les véhicule PHEV n'est pas conçue pour résister à des hauts régimes, équivalent par exemple à une vitesse véhicule supérieure à 130 km/h (kilomètre par heure). Il est donc nécessaire de la désaccoupler avant que le régime soit trop important et qu'elle ne soit endommagée.

Lors des phases d'accélération, il s'agit d'ouvrir le crabot le plus tard possible pour profiter au maximum de la puissance électrique, sans dépasser le régime limite. Durant les décélérations, on souhaite réaliser le couplage le plus tôt possible pour récupérer un maximum d'énergie.

Le temps théorique de décrabotage/crabotage peut dépendre de plusieurs paramètres, comme notamment le régime cible (vitesse de seuil du moyen d'actionnement). Ainsi, un crabotage à faible vitesse est plus rapide qu'un crabotage à haute vitesse (temps de synchronisation de la machine avec le réducteur plus important). La température extérieure, à proximité immédiate du dispositif d'entraînement (crabot) est aussi un paramètre significatif. Un changement d'état du crabot à basse température est ainsi plus long que le même changement à température élevée.

Le temps théorique de couplage ou de découplage du dispositif d'entraînement est influencé par un grand nombre de paramètres, chacun plus ou moins influent sur ce délai. Ainsi, outre les deux paramètres significatifs susvisés, on peut également citer notamment l'altitude, la pression atmosphérique, les paramètres de la batterie, la température des onduleurs, la taille des pneumatique etc.

Tous ces paramètres sont mesurés à l'aide de capteurs, classiquement utilisés à l'heure actuelle, et le système embarqué (dispositif de calcul installé dans le véhicule) détermine, à l'aide de ses données ou paramètres mesurés, le temps de crabotage (couplage) ou de décrabotage (découplage).

A titre d'exemple non limitatif, le temps de décrabotage (= découplage via un crabot) est de 0,8 seconde, dans des conditions d'environnement données, à savoir une température ambiante de 20°C, une vitesse du moyen de déplacement d'environ 100 km/h (kilomètre par heure) et une altitude de 200 mètres au dessus du niveau de la mer pour une pression d'un bar.

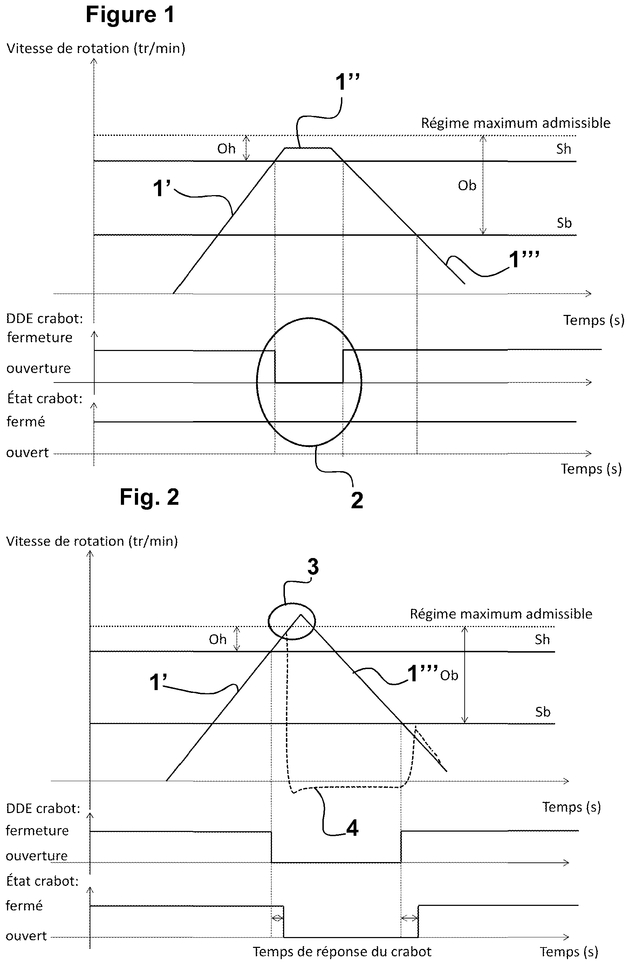

Pour apprécier les figures 1 et 2, les abréviations suivantes ont été employées :
Sh : Seuil de découplage ou « vitesse ascendante de seuil ».

Comme on l'a vu précédemment, Sh peut être prédéterminé (valeur fixée constante) ou être avantageusement variable en fonction de paramètre(s) mesuré(s). Dans la suite, il est décrit cette caractéristique avantageuse (Sh variable), sans qu'elle soit impérative dans le cadre de la présente invention.

Ainsi, Sh tient compte du seuil de protection, correspondant au régime maximum admissible, et d'un offset (décalage) Oh variable en fonction du ou des paramètres mesuré(s) (gradient de vitesse de la roue reliée au dispositif d'entraînement et éventuellement temps de crabotage).

Oh : Différence entre le seuil de protection (vitesse ou régime maximale admissible) et Sh. Oh dépend principalement de l'accélération du véhicule. Cette accélération peut être mesurée et/ou calculée puis filtrée. La mesure de ce paramètre sera de préférence réalisée à partir du gradient de vitesse des roues du train sur lequel est couplée la machine. Sur un véhicule hybride PHEV, l'accélération est calculée en dérivant le régime des roues arrière.

Sb : Seuil d'autorisation de couplage ou « vitesse descendante de seuil ».

A l'instar de Sh, Sb peut être prédéterminé (valeur fixée constante) ou être avantageusement variable en fonction de paramètre(s) mesuré(s). Dans la suite, il est décrit cette caractéristique avantageuse (Sb variable), sans qu'elle soit impérative dans le cadre de la présente invention.

Sb tient compte du seuil de protection et d'un offset Ob correspondant d'une part à la sécurité relative à l'overshoot et d'autre part à une portion variable en fonction du ou des paramètres mesuré(s) (gradient de vitesse des roues reliées au dispositif d'entraînement et éventuellement temps de crabotage).

Ob : Différence entre le seuil de protection (régime ou vitesse maximale admissible). Ob dépend principalement de l'accélération du véhicule. Cette accélération peut être mesurée et/ou calculée puis filtrée. La mesure de ce paramètre sera de préférence réalisée à partir du gradient de vitesse des roues du train sur lequel est couplée la machine. Sur un véhicule hybride PHEV, l'accélération est calculée en dérivant le régime des roues arrière.

A partir du ou des paramètre(s) mesuré(s), les seuils Sh et Sb peuvent être obtenus par un calcul ou déduits par une cartographie dépendant du gradient de vitesse, la température etc.

DDE crabot : requête ou demande de couplage (fermeture) ou découplage (ouverture) du dispositif d'entraînement, en l'espèce le crabot ou dispositif de crabotage. Dans le cas du couplage, la demande de fermeture du crabot est également désignée par le terme d'autorisation car elle ne présente pas de fonction sécuritaire (limitations organiques liées au moyen d'actionnement).

Temps de crabotage : Temps nominal théorique pour le changement d'état du crabot, qui peut varier légèrement, comme on l'a vu précédemment, en fonction d'un certain nombre de paramètres.

Comme on peut le voir sur la figure 1, le régime théorique de la machine électrique présente une première séquence ou segment 1', également visible sur la figure 2, puis, juste après que la vitesse ascendante de seuil Sh est atteinte, le conducteur freine de sorte que la vitesse de rotation de la machine électrique arrive à un palier 1" puis diminue sur la section 1‴.

Suite au passage de la vitesse de seuil Sh, le moyen de commande contrôle, vérifie ou interroge, via les capteurs (non représentés sur les figures), le gradient de vitesse du moyen de déplacement qui devient au moins nul (du fait du freinage du conducteur) sur la section 1" de sorte que la vitesse maximale (régime maximum admissible) n'est pas atteinte, ou plus exactement ne sera jamais atteinte (durant le laps de temps considéré) telle que déterminée par le moyen de commande.

En conséquence, bien qu'une demande d'ouverture (découplage) du dispositif d'entraînement ait été envoyée, comme cela est visible dans la zone 2, un contrordre est émis pour maintenir ce dispositif d'entraînement (crabot) en position fermé, c'est-à-dire pour conserver la position de couplage du dispositif d'entraînement.

Sur la figure 2 est représentée une variante d'exécution complémentaire de l'invention.

Dans le mode d'exécution représenté sur cette figure, la demande de décrabotage (découplage) intervient lorsque le régime équivalent est égal au seuil Sh tandis que la demande de crabotage (couplage) intervient lorsque le régime équivalent est égal au seuil Sb mais, dans cette variante, Sh et Sb ne sont plus prédéfinis mais sont variables en fonction d'au moins un paramètre mesuré.

Comme on peut le voir sur la figure 2, le régime théorique 1' de la machine électrique doit normalement dépasser le régime maximum admissible, selon la zone 3, mais le régime réel de la machine électrique 4 évite tout dépassement grâce à la caractéristique avantageuse de l'invention consistant à rendre la vitesse ascendante de seuil variable en fonction de paramètre(s) mesuré(s). En effet, ici, la vitesse ascendante de seuil est abaissée du fait du ou des paramètre(s) mesuré(s), en particulier le gradient de vitesse du moyen de déplacement, de sorte que le régime maximum admissible (pour le moyen d'actionnement) n'est jamais atteint.

Outre le temps de couplage/découplage du dispositif d'entraînement, le paramètre crucial consiste en le gradient de vitesse du moyen de déplacement, c'est-à-dire l'accélération en l'espèce de la roue ou des roues auxquelles sont reliées le dispositif d'entraînement et le moyen d'actionnement (la machine électrique).

Bien entendu, on peut utiliser uniquement le paramètre mesuré relatif à l'accélération du moyen de déplacement, voire uniquement le temps mesuré par paramètre(s) de couplage/découplage du dispositif d'entraînement, mais avantageusement on utilise ces deux informations pour déterminer la valeur de vitesse (ascendante ou descendante) de seuil de fonctionnement et ainsi déclencher le signal de couplage ou découplage.

La valeur de vitesse (ascendante ou descendante) de seuil de fonctionnement est ainsi adaptée à chaque situation de vie du véhicule.

Les découplages réalisés sont sécuritaires et sont donc prioritaires sur toutes les demandes de couplages. Les couplages quant à eux ne sont pas prioritaires, il s'agit de les autoriser si besoin. On peut en effet tout à fait envisager que le couplage s'effectue uniquement lorsque la vitesse du moyen d'actionnement devient significativement inférieure à la vitesse maximale admissible de fonctionnement.

La vitesse du moyen d'actionnement, ici de la machine électrique, est obtenue, dans cet exemple d'exécution, en multipliant la vitesse de rotation des roues arrières (celles reliées audit moyen d'actionnement) par la démultiplication du réducteur. On ne peut pas directement mesurer ou utiliser la vitesse du moyen d'actionnement car à chaque découplage cette vitesse passe à zéro, ce qui autoriserait le décrabotage même à haute vitesse du véhicule.

## Revendications

1. Système de pilotage du couplage/découplage d'un dispositif d'entraînement de véhicule, ledit système comportant ledit dispositif d'entraînement, un moyen d'actionnement, au moins un moyen de déplacement du véhicule et un moyen de commande, le dispositif d'entraînement étant actionné par le moyen d'actionnement, dans lequel le moyen de déplacement du véhicule est entraîné par le dispositif d'entraînement lorsqu'il est en mode de couplage, le moyen d'actionnement présentant une vitesse maximale admissible de fonctionnement ainsi qu'une vitesse ascendante de seuil de fonctionnement (Sh), inférieure à ladite vitesse maximale, commandant, via le moyen de commande, le découplage du dispositif d'entraînement, **caractérisé en ce que**, une fois la commande de découplage envoyée, le moyen de commande contrôle au moins une valeur du gradient de vitesse du moyen de déplacement pour confirmer ou infirmer la commande de découplage.

2. Système selon la revendication 1, **caractérisé en ce qu'**il comprend une vitesse descendante de seuil, inférieure à ladite vitesse maximale et à ladite vitesse ascendante de seuil, commandant, via ledit moyen de commande, le couplage du dispositif d'entraînement et **en ce que**, une fois la commande de couplage envoyée, le moyen de commande contrôle au moins une valeur du gradient de vitesse de déplacement pour confirmer ou infirmer la commande de couplage.

3. Système selon la revendication 1 ou 2, caractérisé en ce la confirmation de la commande de découplage est vérifiée si ladite valeur entraîne la vitesse du moyen d'actionnement à égaler au moins ladite vitesse maximale et en ce que l'infirmation de la commande de découplage est vérifiée si ladite valeur entraîne la vitesse du moyen d'actionnement à rester inférieure à ladite vitesse maximale, et inversement pour la commande de couplage.

4. Système selon l'une quelconque des revendications précédentes, **caractérisé en ce que** ladite vitesse ascendante de seuil (Sh) et/ou ladite vitesse descendante de seuil (Sb) est/sont variable(s) en fonction d'au moins un paramètre mesuré.

5. Système selon la revendication 4, **caractérisé en ce que** ledit paramètre de la vitesse ascendante de seuil et/ou de la vitesse descendante de seuil consiste en un gradient de vitesse du moyen de déplacement.

6. Système selon l'une quelconque des revendications 4 ou 5, **caractérisé en ce que** ledit paramètre de la vitesse ascendante de seuil et/ou de la vitesse descendante de seuil consiste en un temps théorique de couplage et/ou découplage du dispositif d'entraînement.

7. Système selon l'une quelconque des revendications précédentes, **caractérisé en ce que** le dispositif d'entraînement consiste en un crabot ou un embrayage.

8. Système selon l'une quelconque des revendications précédentes, **caractérisé en ce que** le moyen d'actionnement consiste en une machine électrique, une machine à air comprimé ou une machine hydraulique.

9. Véhicule automobile, **caractérisé en ce qu'**il comporte au moins un système de pilotage du couplage/découplage d'un dispositif d'entraînement de véhicule selon l'une quelconque des revendications précédentes et **en ce qu'**il consiste en un véhicule hybride, comportant une traction par moteur thermique et une traction par moteur électrique, ou en un véhicule électrique.

10. Procédé de pilotage du couplage/découplage d'un dispositif d'entraînement de véhicule, dans lequel au moins un moyen de déplacement du véhicule est entraîné par un dispositif d'entraînement lorsqu'il est en mode de couplage, un moyen d'actionnement présentant une vitesse maximale admissible de fonctionnement ainsi qu'une vitesse ascendante de seuil de fonctionnement, inférieure à ladite vitesse maximale, commandant le découplage du dispositif d'entraînement, **caractérisé en ce que**, une fois la commande de découplage envoyée, un moyen de commande contrôle une valeur du gradient de vitesse du moyen de déplacement pour confirmer ou infirmer la commande de découplage.

## Patentansprüche

1. System zum Steuern des Kuppelns/Entkuppelns einer Fahrzeugantriebsvorrichtung, wobei das System die Antriebsvorrichtung, Betätigungsmittel, mindestens ein Fahrzeugbewegungsmittel und ein Steuermittel umfasst, wobei der Steuervorrichtungsantrieb durch das Betätigungsmittel betätigt wird, wobei das Fahrzeug Bewegungsmittel wird im Kopplungsmodus von der Antriebsvorrichtung angetrieben, wobei das Betätigungsmittel eine maximal zulässige Betriebsgeschwindigkeit sowie eine Betriebsschwellenaufwärtsgeschwindigkeit (Sh) aufweist, die niedriger als diese maximale Geschwindigkeit ist, und über das Steuermittel die Entkopplung steuern der Antriebsvorrichtung, **dadurch gekennzeichnet, dass** nach dem Senden des Entkopplungsbefehls die Steuerung beiminus einem Wert des Geschwindigkeitsgradienten des Verschiebungsmittels, um den Entkopplungsbefehl zu bestätigen oder ungültig zu machen.

2. System nach Anspruch 1, **dadurch gekennzeichnet, dass** es eine Abstiegsgeschwindigkeitsschwelle umfasst, die kleiner als die Höchstgeschwindigkeit und die Aufstiegsschwellengeschwindigkeit ist, die über die Steuermittel die Kupplung der Antriebsvorrichtung steuert und dadurch, dass, sobald der Kupplungsbefehl gesendet wurde, steuert die Steuereinrichtung mindestens einen Wert des Verfahrgeschwindigkeitsgradienten, um den Kupplungsbefehl zu bestätigen oder abzulehnen.

3. System nach Anspruch 1 oder 2, **dadurch gekennzeichnet, dass** die Bestätigung des Entkopplungsbefehls überprüft wird, wenn der Wert bewirkt, dass die Geschwindigkeit der Betätigungsmittel mindestens gleich der maximalen Geschwindigkeit ist, und dass die Ungültigkeit des Entkopplungsbefehls überprüft wird, ob der Wert bewirkt, dass die Geschwindigkeit des Betätigungsmittels unter dieser maximalen Geschwindigkeit bleibt und umgekehrt für die Kopplungsbefehl.

4. System nach einem der vorhergehenden Ansprüche, **dadurch gekennzeichnet, dass** die Schwellen-Aufstiegsgeschwindigkeit (Sh) und/oder die Schwellen-Sinkgeschwindigkeit (Sb) in Abhängigkeit von mindestens einem gemessenen Parameter variabel sind/sind.

5. System nach Anspruch 4, **dadurch gekennzeichnet, dass** der Parameter der Aufwärts-Schwellengeschwindigkeit und/oder der Abwärts-Schwellengeschwindigkeit aus einem Geschwindigkeitsgradienten der Verschiebungsmittel besteht.

6. System nach einem der Ansprüche 4 oder 5, **dadurch gekennzeichnet, dass** der Parameter der Aufwärts-Schwellengeschwindigkeit und/oder der Abwärts-Schwellengeschwindigkeit aus einer theoretischen Ein- und/oder Auskopplungszeit der Antriebsvorrichtung besteht.

7. System nach einem der vorhergehenden Ansprüche, **dadurch gekennzeichnet, dass** die Antriebsvorrichtung aus einer Klauenkupplung oder einer Kupplung besteht.

8. System nach einem der vorhergehenden Ansprüche, **dadurch gekennzeichnet, dass** das Betätigungsmittel aus einer elektrischen Maschine, einer Druckluftmaschine oder einer hydraulischen Maschine besteht.

9. Kraftfahrzeug, **dadurch gekennzeichnet, dass** es mindestens ein System zum Steuern des Kuppelns/Entkuppelns einer Fahrzeugantriebsvorrichtung nach einem der vorhergehenden Ansprüche umfasst und dass es aus einem Hybridfahrzeug besteht, das Traktion durch Wärmekraftmaschine und Traktion durch Elektro umfasst Motor oder durch ein Elektrofahrzeug.

10. Verfahren zum Steuern der Kopplung / Entkopplung eines Geräts Fahrzeugantrieb, wobei mindestens ein Fahrzeugbewegungsmittel im Kopplungsmodus von einer Antriebsvorrichtung angetrieben wird, wobei ein Aktuatormittel mit einer maximal zulässigen Betriebsgeschwindigkeit sowie einer geschwindigkeitsaufsteigenden Betriebsschwelle, die kleiner als die maximale Geschwindigkeit ist, das Entkuppeln des steuert Antriebsvorrichtung, **dadurch gekennzeichnet, dass**, sobald der Entkopplungsbefehl gesendet wurde, ein Steuermittel einen Wert des Geschwindigkeitsgradienten des Verschiebungsmittels steuert, um den Entkopplungsbefehl zu bestätigen oder aufzuheben.

## Claims

1. System for controlling the coupling / decoupling of a vehicle drive device, said system comprising said drive device, actuation means, at least one vehicle movement means and one control means, the control device. drive being actuated by the actuating means, wherein the vehicle moving means is driven by the drive device when in coupling mode, the actuating means exhibiting a maximum allowable speed of operation as well as an operating threshold upward speed (Sh), lower than said maximum speed, controlling, via the control means, the decoupling of the drive device, **characterized in that**, once the decoupling command has been sent, the control means control atminus a value of the speed gradient of the displacement means to confirm or invalidate the decoupling command.

2. System according to claim 1, **characterized in that** it comprises a threshold descending speed, less than said maximum speed and said threshold ascending speed, controlling, via said control means, the coupling of the drive device and **in that** that, once the coupling command has been sent, the control means controls at least one value of the displacement speed gradient to confirm or invalidate the coupling command.

3. System according to claim 1 or 2, **characterized in that** the confirmation of the decoupling command is checked if said value causes the speed of the actuating means to equal at least said maximum speed and **in that** the invalidation of the decoupling command is checked whether said value causes the speed of the actuating means to remain below said maximum speed, and vice versa for the coupling command.

4. System according to any one of the preceding claims, **characterized in that** said threshold ascending speed (Sh) and / or said threshold descending speed (Sb) is / are variable as a function of at least one measured parameter.

5. System according to claim 4, **characterized in that** the said parameter of the upward threshold speed and / or the downward threshold speed consists of a speed gradient of the displacement means.

6. System according to any one of claims 4 or 5, **characterized in that** the said parameter of the upward threshold speed and / or the downward threshold speed consists of a theoretical coupling and / or decoupling time of the drive device.

7. System according to any one of the preceding claims, **characterized in that** the drive device consists of a dog clutch or a clutch.

8. System according to any one of the preceding claims, **characterized in that** the actuating means consists of an electric machine, a compressed air machine or a hydraulic machine.

9. Motor vehicle, **characterized in that** it comprises at least one system for controlling the coupling / decoupling of a vehicle drive device according to any one of the preceding claims and **in that** it consists of a hybrid vehicle, comprising traction by heat engine and traction by electric motor, or by an electric vehicle.

10. Method for controlling the coupling / decoupling of a device vehicle drive, wherein at least one vehicle movement means is driven by a drive device when in coupling mode, an actuator means having a maximum allowable operating speed as well as a speed ascending operating threshold, less than said maximum speed, controlling the decoupling of the drive device, **characterized in that**, once the decoupling command has been sent, a control means controls a value of the speed gradient of the displacement means for confirm or cancel the decoupling command.
